# EUROPEAN PATENT SPECIFICATION

(11) **EP 3 737 139 B1**
(45) Date of publication and mention of the grant of the patent: **01.03.2023**
(21) Application number: 18901846.8
(22) Date of filing: 23.01.2018
(51) Int. Cl.: H04W 24/02, H04W 24/10

(54) **INFORMATION REPORTING METHOD AND APPARATUS**
VERFAHREN UND VORRICHTUNG ZUR INFORMATIONSBERICHTERSTATTUNG
PROCÉDÉ ET APPAREIL DE RAPPORT D'INFORMATIONS

(43) Date of publication of application: 11.11.2020
(73) Proprietor: Beijing Xiaomi Mobile Software Co., Ltd., Beijing 100085 (CN)
(72) Inventor: HONG, Wei, Beijing 100085 (CN)
(74) Representative: dompatent von Kreisler Selting Werner - Partnerschaft von Patent- und Rechtsanwälten mbB
(86) International application number: PCT/CN2018/073837
(87) International publication number: WO 2019/144280

(56) References cited:
- CN-A- 102 123 415
- CN-A- 102 271 319
- CN-A- 102 802 174
- CN-A- 103 327 441
- US-A1- 2012 087 258
- US-A1- 2014 126 403
- CMCC: "Introduction of new measurement collection in MDT", 3GPP DRAFT; 36331_CR3182(REL-15)_R2-1713259_INTRODUCTI ON OF NEW MEASUREMENT COLLECTION IN MDTV1, 3RD GENERATION PARTNERSHIP PROJECT (3GPP), MOBILE COMPETENCE CENTRE ; 650, ROUTE DES LUCIOLES ; F-06921 , vol. RAN WG2, no. Reno, Nevada, USA; 20171127 - 20171201 17 November 2017 (2017-11-17), XP051371304, Retrieved from the Internet: URL:http://www.3gpp.org/ftp/tsg%5Fran/WG2% 5FRL2/TSGR2%5F100/Docs/ [retrieved on 2017-11-17]
- "3rd Generation Partnership Project; Technical Specification Group Radio Access Network; Evolved Universal Terrestrial Radio Access (E-UTRA); Radio Resource Control (RRC); Protocol specification (Release 14)", 3GPP STANDARD; TECHNICAL SPECIFICATION; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V14.5.1, 9 January 2018 (2018-01-09), pages 1-764, XP051392554, [retrieved on 2018-01-09]
- CATT: "Minimisation of drive tests models", 3GPP TSG-RAN WG2 meeting #67, R2-094312, vol. RAN WG2, 18 August 2009 (2009-08-18), - 28 August 2009 (2009-08-28), XP050604643,

## Description

### TECHNICAL FIELD

The present disclosure relates to the field of communications, and in particular, to an information reporting method and apparatus.

### BACKGROUND

Drive Tests may reflect the status of a network, play a direct measurement and evaluation role on network performance indicators, and point out the problems of the network. In related arts, traditional network optimization is based on data of drive tests. Network data such as electrical level and quality is collected through a drive test instrument, and these data is analyzed to discover network problems, then the network is optimized with respect to problem areas. However, the traditional network optimization often requires a heavy investment in human, material and financial resources, and also has very high experience requirements for network optimization personnel.
US20140126403A1 discloses methods of obtaining measurements in the presence of storing and/or highly varying interference.
3GPP DRAFT; 36331_CR3182(rel-15)_R2-1713259 discloses introduction of new measurement collection in MDT.
3GPP TS 36.331 no. V14.5.1 discloses 3^{rd} generation partnership project, technical specification group radio access network, evolved universal terrestrial radio access, radio resource control, protocol specification.

### SUMMARY

In order to overcome the problems existing in the related art, examples of the present disclosure provide an information reporting method and apparatus.

According to a first aspect of the examples of the present disclosure, there is provided an information reporting method according to claim 1. According to a second aspect of the examples of the present disclosure, there is provided an information reporting method according to claim 7.

According to a third aspect of the examples of the present disclosure, there is provided an information reporting apparatus according to claim 11. The apparatus is applicable to a terminal.

According to a fourth aspect of the examples of the present disclosure, there is provided an information reporting apparatus according to claim 12. The apparatus is applicable to a base station.

The technical solutions provided by the examples of the present disclosure may include the following beneficial effects.

The terminal in the present disclosure may send first indication information to a base station, where the first indication information is configured to represent reported-information types supported by the terminal. When receiving second indication information sent by the base station, where the second indication information is configured to represent specified reported-information types configured by the base station for the terminal according to the first indication information, and the specified reported-information types include one or more of the reported-information types supported by the terminal, the terminal may send MDT measurement information corresponding to the second indication information to the base station. In this way, the terminal can report information in accordance with the configuration of the base station, and send only MDT measurement information required by the base station, improving information reporting efficiency and saving resource overhead.

The base station in the present disclosure may receive first indication information sent by a terminal, where the first indication information is configured to represent reported-information types supported by the terminal. The base station may configure specified reported-information types for the terminal according to the first indication information, where the specified reported-information types include one or more of the reported-information types supported by the terminal. The base station may send second indication information to the terminal, where the second indication information is configured to represent the specified reported-information types configured by the base station for the terminal, so that the terminal sends MDT measurement information corresponding to the second indication information to the base station. In this way, the base station can receive only required MDT measurement information, improving information reporting efficiency and saving resource overhead.

It should be understood that the above general description and the following detailed description are only exemplary and explanatory and are not restrictive of the present disclosure.

### BRIEF DESCRIPTION OF THE DRAWINGS

The accompanying drawings, which are incorporated in and constitute a part of this specification, illustrate examples consistent with the present disclosure and, together with the description, serve to explain the principles of the disclosure.
FIG. 1 is a flowchart illustrating an information reporting method according to an example.
FIG. 2 is an application scenario diagram illustrating an information reporting method according to an example.
FIG. 3 is a flowchart illustrating another information reporting method according to an example.
FIG. 4 is a flowchart illustrating another information reporting method according to an example.
FIG. 5 is a flowchart illustrating another information reporting method according to an example.
FIG. 6 is a flowchart illustrating an information reporting method according to an example.
FIG. 7 is a flowchart illustrating another information reporting method according to an example.
FIG. 8 is a flowchart illustrating another information reporting method according to an example.
FIG. 9 is an information interaction diagram illustrating an information reporting method according to an example.
FIG. 10 is an information interaction diagram illustrating another information reporting method according to an example.
FIG. 11 is a block diagram illustrating an information reporting apparatus according to an example.
FIG. 12 is a block diagram illustrating another information reporting apparatus according to an example.
FIG. 13 is a block diagram illustrating another information reporting apparatus according to an example.
FIG. 14 is a block diagram illustrating another information reporting apparatus according to an example.
FIG. 15 is a block diagram illustrating an information reporting apparatus according to an example.
FIG. 16 is a block diagram illustrating another information reporting apparatus according to an example.
FIG. 17 is a block diagram illustrating another information reporting apparatus according to an example.
FIG. 18 is a schematic structural diagram illustrating an information reporting apparatus according to an example.
FIG. 19 is a schematic structural diagram illustrating an information reporting apparatus according to an example.

### DETAILED DESCRIPTION OF THE EMBODIMENTS

Examples will be described in detail herein, with the illustrations thereof represented in the drawings. When the following descriptions involve the drawings, like numerals in different drawings refer to like or similar elements unless otherwise indicated. The embodiments described in the following examples do not represent all embodiments consistent with the present disclosure. Rather, they are merely examples of apparatuses and methods consistent with some aspects of the present disclosure as detailed in the appended claims.

The terms used in the present disclosure are for the purpose of describing particular examples only, and are not intended to limit the present disclosure. Terms determined by "a", "the" and "said" in their singular forms in the present disclosure and the appended claims are also intended to include plurality, unless clearly indicated otherwise in the context. It should also be understood that the term "and/or" as used herein refers to and includes any and all possible combinations of one or more of the associated listed items.

It is to be understood that, although terms "first," "second," "third," and the like may be used in the present disclosure to describe various information, such information should not be limited to these terms. These terms are only used to distinguish one category of information from another. For example, without departing from the scope of the present disclosure, indication information may be referred as second information; and similarly, second information may also be referred as indication information. Depending on the context, the word "if' as used herein may be interpreted as "when" or "upon" or "in response to determining".

DT (Drive Tests) may reflect the status of a network, play a direct measurement and evaluation role on network performance indicators, and point out the problems of the network. In the related art, traditional network optimization is based on data of drive tests. Network data such as electrical level and quality is collected through a drive test instrument, and these data is analyzed to discover network problems, then the network is optimized with respect to problem areas. However, the traditional network optimization often requires a heavy investment in human, material and financial resources, and also has very high experience requirements for network optimization personnel.

MDT (Minimization of Drive Tests) technology obtains relevant parameters required for network optimization mainly from a measurement report reported by a mobile phone.

In order to make MDT more effective, presently, its application scenarios mainly include coverage optimization, capacity optimization, mobile optimization, QoS (Quality of Service) guarantee, etc.

Current MDT technology is mainly applied to outdoor scenes. In the outdoor scenes, a terminal may rely on GPS (Global Positioning System) for accurate positioning and information reporting. However, with the development of mobile communication technology, more and more mobile communications and traffic are generated indoors, and there are more and more Bluetooth devices and WLAN (Wireless Local Area Network) devices deployed indoors. Traditional MDT technology faces some challenges.

However, in existing MDT mechanism, the terminal reports all stored MDT measurement information after receiving a reporting request from a base station, even if some MDT measurement information is not required by the base station, resulting in wastes of resources and signaling.

The present disclosure proposes an information reporting method to solve the above problems. In this method, a terminal may first send, to a base station, reported-information types supported by the terminal. The base station may configure specified reported-information types for the terminal according to the reported-information types supported by the terminal. After receiving the specified reported-information types, the terminal sends MDT measurement information corresponding to the specified reported-information types to the base station. In this way, all MDT measurement information received by the base station is required by the base station, reducing wastes of resources and signaling.

The technical solutions provided by the examples of the present disclosure are described below with specific embodiments.

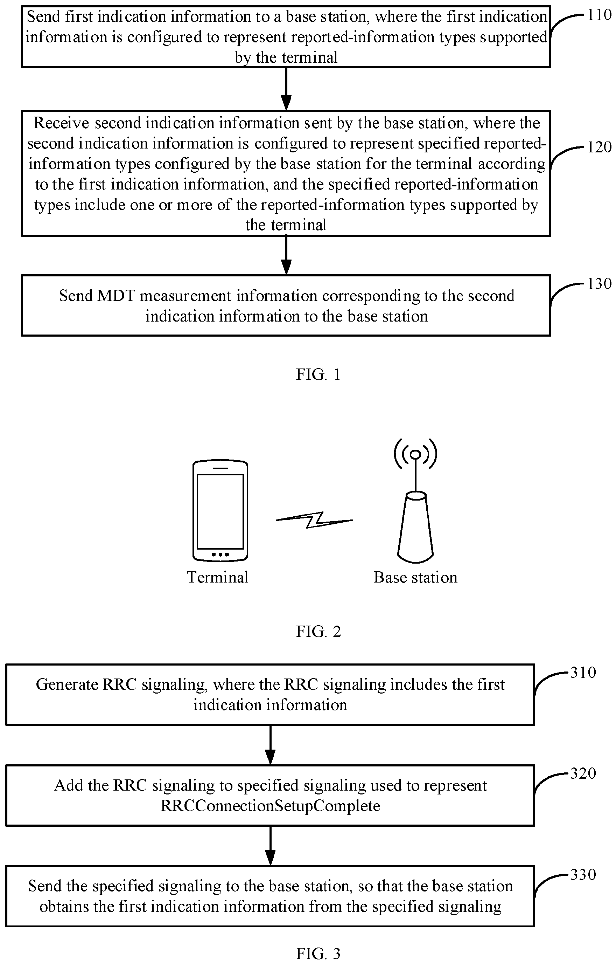

FIG. 1 is a flowchart illustrating an information reporting method according to an example. FIG. 2 is an application scenario diagram illustrating an information reporting method according to an example. The information reporting method may be applied to a terminal. As shown in FIG. 1, the information reporting method may include the following blocks 110-130.

In step 110, first indication information is sent to a base station. The first indication information is configured to represent reported-information types that the terminal supports.

In the examples of the present disclosure, the terminal, after being connected to a base station, sends, to the base station through first indication information, reported-information types that the terminal supports, so that the base station may learn the reported-information types that the terminal supports.

The reported-information types may refer to types of MDT measurement information can be reported by the terminal.

In an example, the first indication information may include one or more reported-information types corresponding to MDT measurement information that is measurable by the terminal. These reported-information types are used to indicate what types of MDT measurement information can be reported by the terminal.

In step 120, second indication information sent by the base station is received. The second indication information is configured to represent specified reported-information types configured by the base station for the terminal according to the first indication information. The specified reported-information types include one or more of the reported-information types supported by the terminal.

In the examples of the present disclosure, the terminal receives second indication information sent by the base station, and may learn the MDT measurement information required by the base station according to the second indication information.

In an example, the second indication information may include one or more of the specified reported-information types configured by the base station for the terminal according to the first indication information. These specified reported-information types are used to indicate the types of MDT measurement information that the base station requires the terminal to report. The specified reported-information types may be part or all of the reported-information types provided by the terminal.

The specified reported-information types may refer to MDT measurement information that the base station requires the terminal to report. The MDT measurement information that the base station requires the terminal to report may be part or all of MDT measurement information that can be reported by the terminal.

In step 130, MDT measurement information corresponding to the second indication information is sent to the base station.

In the examples of the present disclosure, the terminal receives the second indication information, and learns MDT measurement information required by the base station according to the second indication information. In this way, it is possible to send, to the base station, only MDT measurement information required instead of that not required thereby.

In an example scenario, as shown in FIG. 2, a terminal and a base station are included. The terminal, after being connected to the base station, sends reported-information types supported by the terminal to the base station through first indication information. The base station, after learning the reported-information types that the terminal supports, configures specified reported-information types for the terminal according to the reported-information types that the terminal supports, and sends the configured specified reported-information types to the terminal through the second indication information. The terminal, after learning the specified reported-information types configured by the base station, sends MDT measurement information corresponding to the specified reported-information types to the base station. In this way, the MDT measurement information sent by the terminal not only meets the requirements of the base station, but also reduces wastes of resources and signaling.

As can be known from the above examples, the first indication information is sent to a base station, where the first indication information is configured to represent reported-information types that the terminal supports. The second indication information sent by the base station is received, where the second indication information is configured to represent specified reported-information types configured by the base station for the terminal according to the first indication information, and the specified reported-information types include one or more of the reported-information types that the terminal supports. Then MDT measurement information corresponding to the second indication information may be sent to the base station. In this way, the terminal can report information in accordance with the configuration of the base station, and send only MDT measurement information required by the base station, improving information reporting efficiency and saving resource overhead.

FIG. 3 is a flowchart illustrating another information reporting method according to an example. The information reporting method may be applied to a terminal. Based on the method shown in FIG. 1, when the step 110 is performed, as shown in FIG. 3, the information reporting method may include the following steps 310-330.

In step 310, RRC (Radio Resource Control) signaling is generated. The RRC signaling includes the first indication information. The first indication information may include one or more reported-information types corresponding to MDT measurement information that can be measured by the terminal. These reported-information types are used to indicate types of MDT measurement information can be reported by the terminal.

For example, reported-information types included in the first indication information may include an EUTRAN (Evolved UMTS Terrestrial Radio Access Network) type, and/or a UTRAN (UMTS Terrestrial Radio Access Network) type, and/or a BT (Bluetooth) type, and/or a WLAN (Wireless Local Area Networks) type. UMTS (Universal Mobile Telecommunications System) is a complete 3G mobile communication technology standard.

In addition, these reported-information types are configured to indicate MDT measurement information of the EUTRAN type, and/or the UTRAN type, and/or the BT type, and/or the WLAN type that can be reported by the terminal.

In step 320, the RRC signaling is added to specified signaling configured to characterize the successful completion of an RRC connection establishment. The specified signaling may be RRCConnectionSetupComplete signaling.

In step, the specified signaling is sent to the base station, so that the base station obtains the first indication information from the specified signaling.

As can be known from the above examples, the first indication information is sent to the base station through the specified signaling configured to represent the successful completion of an RRC connection establishment, so that the base station learns the reported-information types supported by the terminal in time, improving the reliability of transmission of the first indication information.

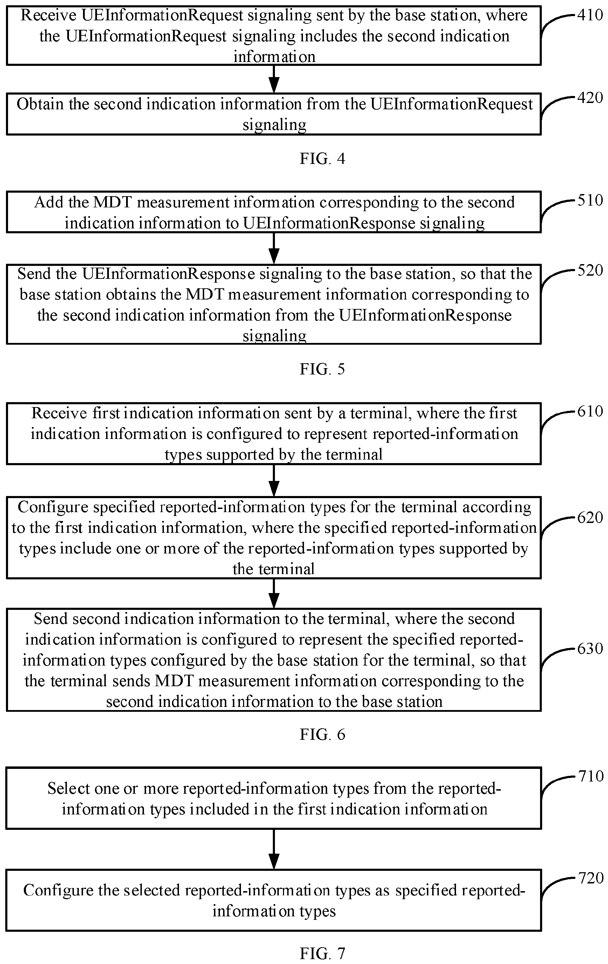

FIG. 4 is a flowchart illustrating another information reporting method according to an example. The information reporting method may be applied to a terminal. Based on the method shown in FIG. 1, when the step 120 is performed, as shown in FIG. 4, the information reporting method may include the following steps 410-420.

In step 410, UEInformationRequest signaling sent by the base station is received. The UEInformationRequest signaling includes the second indication information. The second indication information may include one or more of the specified reported-information types configured by the base station for the terminal according to the first indication information. These specified reported-information types are used to indicate the types of MDT measurement information that the base station requires the terminal to report, and the specified reported-information types may be part or all of the reported-information types provided by the terminal.

In step 420, the second indication information is obtained from the UEInformationRequest signaling.

As can be known from the above examples, the UEInformationRequest signaling sent by the base station is received, and the second indication information is obtained from the UEInformationRequest signaling, so that the terminal learns the specified reported-information types configured by the base station in time, improving the accuracy of obtaining the second indication information.

FIG. 5 is a flowchart illustrating another information reporting method according to an example. The information reporting method may be applied to a terminal. Based on the method shown in FIG. 1, when the step 130 is performed, as shown in FIG. 4, the information reporting method may include the following steps 510-520.

In step 510, the MDT measurement information corresponding to the second indication information is added to UEInformationResponse signaling. The second indication information may include one or more of the specified reported-information types configured by the base station for the terminal according to the first indication information. The MDT measurement information corresponding to the second indication information may be MDT measurement information corresponding to one or more specified reported-information types.

In step 520, the UEInformationResponse signaling is sent to the base station, so that the base station obtains the MDT measurement information corresponding to the second indication information from the UEInformationResponse signaling.

As can be known from the above examples, the MDT measurement information corresponding to the second indication information is sent to the base station through the UEInformationResponse signaling, so that the base station obtains the MDT measurement information corresponding to the second indication information from the UEInformationResponse signaling in time, improving the reliability of transmission of the MDT measurement information.

FIG. 6 is a flowchart illustrating an information reporting method according to an example. The information reporting method may be applied to a base station. As shown in FIG. 6, the information reporting method may include the following steps 610-630.

In step 610, first indication information sent by a terminal is received. The first indication information is configured to represent reported-information types that the terminal supports.

In the examples of the present disclosure, the base station, after receiving the first indication information, may learn the reported-information types that the terminal supports according to the first indication information. The reported-information types may refer to types of MDT measurement information can be reported by the terminal.

In an example, the first indication information may include one or more reported-information types corresponding to MDT measurement information that can be measured by the terminal. These reported-information types are used to indicate what types of MDT measurement information can be reported by the terminal.

In step 620, specified reported-information types are configured for the terminal according to the first indication information. The specified reported-information types include one or more of the reported-information types that the terminal supports.

In the examples of the present disclosure, the specified reported-information types configured by the base station for the terminal is to enable the terminal to report MDT measurement information required by the base station. The specified reported-information types may refer to the types of MDT measurement information that the base station requires the terminal to report. The MDT measurement information that the base station requires the terminal to report may be part or all of MDT measurement information that can be reported by the terminal.

In step 630, second indication information is sent to the terminal. The second indication information is configured to represent the specified reported-information types configured by the base station for the terminal, so that the terminal sends MDT measurement information corresponding to the second indication information to the base station.

In the examples of the present disclosure, the base station sends the specified reported-information types configured by the base station for the terminal to the terminal through the second indication information, so that the terminal may learn types of MDT measurement information required by the base station, and send the MDT measurement information required by the base station to the base station.

In an example, the second indication information may include one or more of the specified reported-information types configured by the base station for the terminal according to the first indication information. These specified reported-information types are used to indicate the types of MDT measurement information that the base station requires the terminal to report. The specified reported-information types may be part or all of the reported-information types provided by the terminal.

As can be known from the above examples, the first indication information sent by a terminal is received, where the first indication information is configured to represent reported-information types that the terminal supports. Specified reported-information types are configured for the terminal according to the first indication information, where the specified reported-information types include one or more of the reported-information types that the terminal supports. Second indication information is sent to the terminal, wherein the second indication information is configured to represent the specified reported-information types configured by the base station for the terminal, so that the terminal sends MDT measurement information corresponding to the second indication information to the base station. In this way, the base station can receive only required MDT measurement information, improving information reporting efficiency and saving resource overhead.

FIG. 7 is a flowchart illustrating another information reporting method according to an example. The information reporting method may be applied to a base station. Based on the method shown in FIG. 6, the first indication information may include one or more reported-information types corresponding to MDT measurement information that can be measured by the terminal. These reported-information types are used to indicate what types of MDT measurement information can be reported by the terminal. When the step 620 is performed, as shown in FIG. 7, the information reporting method may include the following steps 710-720.

In step 710, one or more reported-information types are selected from the reported-information types included in the first indication information.

In the examples of the present disclosure, the base station may select one or more reported-information types from the reported-information types included in the first indication information according to its own requirements.

In step 720, the selected reported-information types are configured as specified reported-information types. These specified reported-information types are used to indicate the types of MDT measurement information that the base station requires the terminal to report. The specified reported-information types may be part or all of the reported-information types provided by the terminal.

As can be known from the above examples, one or more reported-information types are selected from the reported-information types included in the first indication information, and the selected reported-information types are configured as specified reported-information types, so that the terminal may report only MDT measurement information of these specified reported-information types, meeting individual requirements of the base station and reducing wastes of resources and signaling.

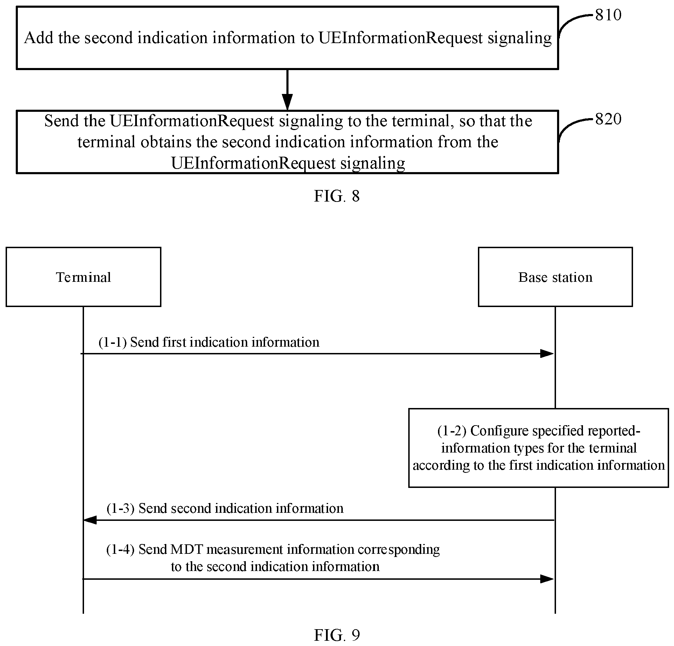

FIG. 8 is a flowchart illustrating another information reporting method according to an example. The information reporting method may be applied to a base station. Based on the method shown in FIG. 6, when the step 630 is performed, as shown in FIG. 8, the information reporting method may include the following steps 810-820.

In step 810, second indication information is added to UEInformationRequest signaling. The second indication information may include one or more of the specified reported-information types configured by the base station for the terminal according to the first indication information. These specified reported-information types are used to indicate the types of MDT measurement information that the base station requires the terminal to report. The specified reported-information types may be part or all of the reported-information types provided by the terminal.

At block 820, the UEInformationRequest signaling is sent to the terminal, so that the terminal obtains the second indication information from the UEInformationRequest signaling.

As can be known from the above examples, the second indication information is sent to the terminal through the UEInformationRequest signaling, so that the terminal learns the specified reported-information types configured by the base station for the terminal in time, improving the reliability of transmission of the second indication information.

FIG. 9 is an information interaction diagram illustrating an information reporting method according to an example. As shown in FIG. 9, a terminal and a base station are included, and details of an information interaction process between the terminal and the base station are as follows.
(1-1) The terminal sends first indication information to a base station. The first indication information is configured to represent reported-information types that the terminal supports. The reported-information types may refer to the types of MDT measurement information that can be reported by the terminal.

For example, the first indication information may include one or more reported-information types corresponding to MDT measurement information that can be measured by the terminal. These reported-information types are used to indicate the types of MDT measurement information that can be reported by the terminal.
(1-2) The base station configures specified reported-information types for the terminal according to the first indication information. The specified reported-information types include one or more of the reported-information types that the terminal supports. The specified reported-information types may refer to the types of MDT measurement information that the base station requires the terminal to report. The MDT measurement information that the base station requires the terminal to report may be part or all of MDT measurement information that can be reported by the terminal.

For example, the specified reported-information types may include one or more of the specified reported-information types configured by the base station for the terminal according to the first indication information. These specified reported-information types are used to indicate the types of MDT measurement information that the base station requires the terminal to report. The specified reported-information types may be part or all of the reported-information types provided by the terminal.
(1-3) The base station sends second indication information to the terminal. The second indication information is configured to represent the specified reported-information types configured by the base station for the terminal.

For example, the second indication information may include one or more of the specified reported-information types configured by the base station for the terminal according to the first indication information. These specified reported-information types are used to indicate the types of MDT measurement information that the base station requires the terminal to report. The specified reported-information types may be part or all of the reported-information types provided by the terminal.
(1-4) The terminal sends MDT measurement information corresponding to the second indication information to the base station. The MDT measurement information corresponding to the second indication information is MDT measurement information required by the base station.

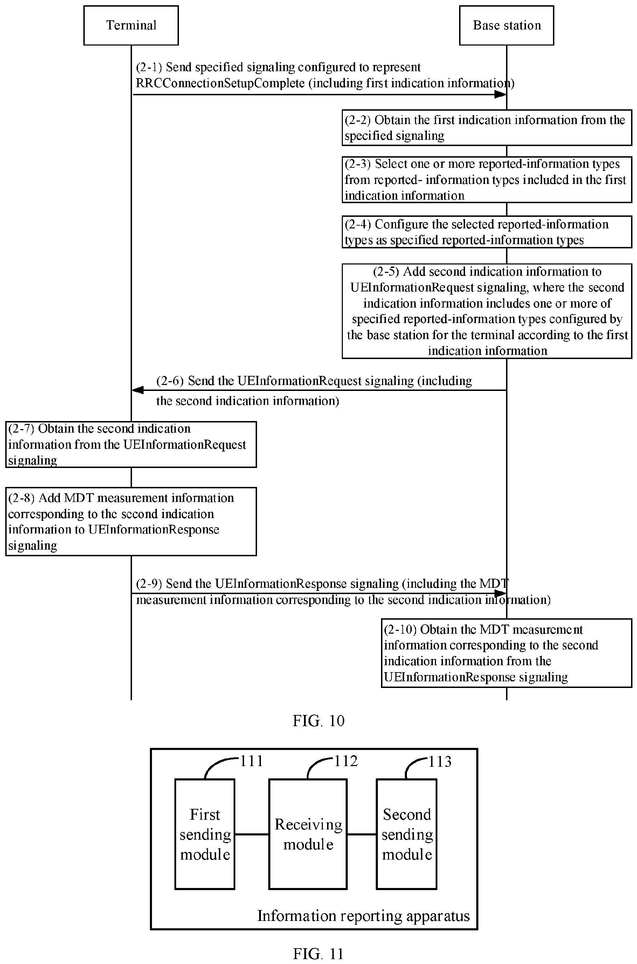

FIG. 10 is an information interaction diagram illustrating another information reporting method according to an example. As shown in FIG. 10, a terminal and a base station are included, and details of an information interaction process between the terminal and the base station are as follows.
(2-1) The terminal sends, to the base station, specified signaling configured to represent the successful completion of an RRC connection establishment, where the specified signaling includes first indication information. The first indication information may include one or more reported-information types corresponding to MDT measurement information that can be measured by the terminal. These reported-information types are used to indicate the types of MDT measurement information that can be reported by the terminal.
(2-2) The base station obtains the first indication information from the specified signaling.
(2-3) The base station selects one or more reported-information types from the reported-information types included in the first indication information.
(2-4) The base station configures the selected reported-information types as specified reported-information types.
(2-5) The base station adds second indication information to UEInformationRequest signaling. The second indication information includes one or more specified reported-information types configured by the base station for the terminal according to the first indication information.
(2-6) The base station sends the UEInformationRequest signaling to the terminal. The UEInformationRequest signaling includes the second indication information.
(2-7) The terminal obtains the second indication information from the UEInformationRequest signaling.
(2-8) MDT measurement information corresponding to the second indication information is added to the UEInformationResponse signaling.
(2-9) The UEInformationResponse signaling is sent to the base station. The UEInformationResponse signaling includes the MDT measurement information corresponding to the second indication information.
(2-10) The base station obtains the MDT measurement information corresponding to the second indication information from the UEInformationResponse signaling.

Corresponding to the information reporting method examples, the present disclosure further provides information reporting apparatus examples.

FIG. 11 is a block diagram illustrating an information reporting apparatus according to an example. The apparatus is applicable to a terminal, and is configured to execute the information reporting method shown in FIG. 1. As shown in FIG. 11, the information reporting apparatus may include:
a first sending module 111 configured to send first indication information to a base station, where the first indication information is configured to represent reported-information types supported by the terminal;
a receiving module 112 configured to receive second indication information sent by the base station, where the second indication information is configured to represent specified reported-information types configured by the base station for the terminal according to the first indication information, and the specified reported-information types include one or more of the reported-information types supported by the terminal;
a second sending module 113 configured to send MDT measurement information corresponding to the second indication information to the base station.

As can be known from the above examples, first indication information is sent to a base station, where the first indication information is configured to represent reported-information types supported by the terminal. When second indication information sent by the base station is received, where the second indication information is configured to represent specified reported-information types configured by the base station for the terminal according to the first indication information, and the specified reported-information types include one or more of the reported-information types, MDT measurement information corresponding to the second indication information may be sent to the base station. In this way, the terminal can report information in accordance with the configuration of the base station, and send only MDT measurement information required by the base station, improving information reporting efficiency and saving resource overhead.

In an example, based on the apparatus shown in FIG. 11, the first indication information includes one or more reported-information types corresponding to MDT measurement information that can be measured by the terminal.

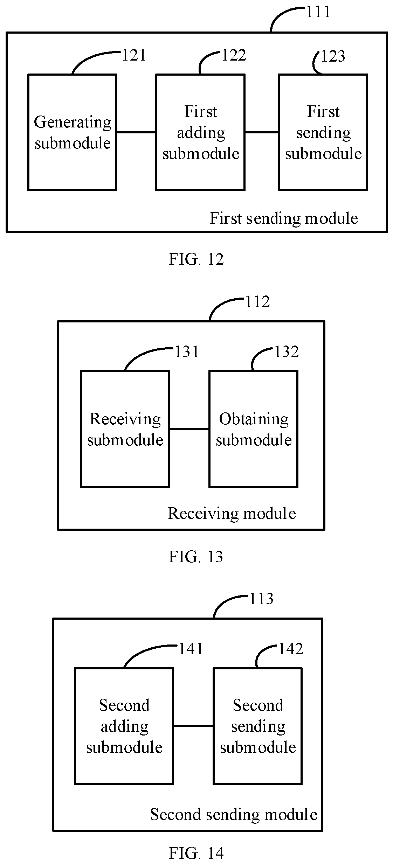

In an example, based on the apparatus shown in FIG. 11, as shown in FIG. 12, the first sending module 111 may include:
a generating submodule 121 configured to generate Radio Resource Control RRC signaling, where the RRC signaling includes the first indication information;
a first adding submodule 122 configured to add the RRC signaling to specified signaling configured to represent the successful completion of an RRC connection establishment;
a first sending submodule 123 configured to send the specified signaling to the base station, so that the base station obtains the first indication information from the specified signaling.

As can be known from the above examples, the first indication information is sent to the base station through the specified signaling configured to represent the successful completion of an RRC connection establishment, so that the base station learns the reported-information types supported by the terminal in time, improving the reliability of transmission of the first indication information.

In an example, based on the apparatus shown in FIG. 11, the second indication information includes one or more of the specified reported-information types configured by the base station for the terminal according to the first indication information.

In an example, based on the apparatus shown in FIG. 11, as shown in FIG. 13, the receiving module 112 may include:
] a receiving submodule 131 configured to receive UEInformationRequest signaling sent by the base station, where the UEInformationRequest signaling includes the second indication information;
an obtaining submodule 132 configured to obtain the second indication information from the UEInformationRequest signaling.

As can be known from the above examples, the UEInformationRequest signaling sent by the base station is received, and the second indication information is obtained from the UEInformationRequest signaling, so that the terminal learns the specified reported-information types configured by the base station in time, improving the accuracy of obtaining the second indication information.

In an example, based on the apparatus shown in FIG. 11, as shown in FIG. 14, the second sending module 113 may include:
a second adding submodule 141 configured to add the MDT measurement information corresponding to the second indication information to UEInformationResponse signaling;
a second sending submodule 142 configured to send the UEInformationResponse signaling to the base station, so that the base station obtains the MDT measurement information corresponding to the second indication information from the UEInformationResponse signaling.

As can be known from the above examples, the MDT measurement information corresponding to the second indication information is sent to the base station through the UEInformationResponse signaling, so that the base station obtains the MDT measurement information corresponding to the second indication information from the UEInformationResponse signaling in time, improving the reliability of transmission of the MDT measurement information.

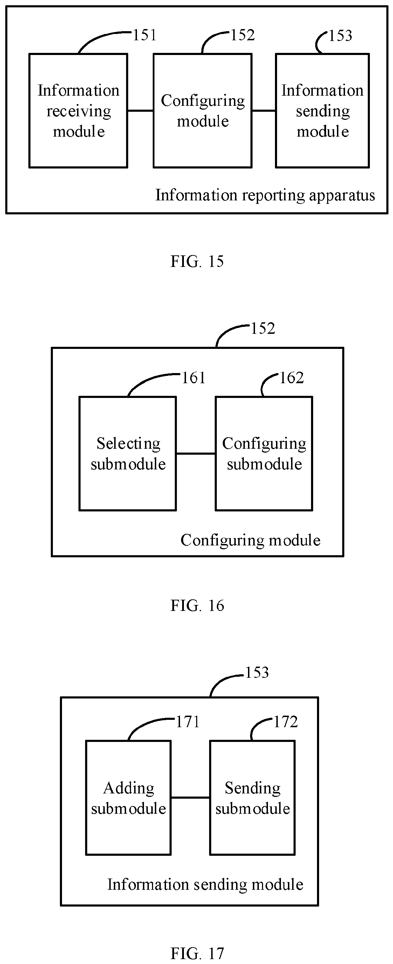

FIG.15 is a block diagram illustrating an information reporting apparatus according to an example. The apparatus is applicable to a base station, and is configured to execute the information reporting method shown in FIG. 6. As shown in FIG. 15, the information reporting apparatus may include:
an information receiving module 151 configured to receive first indication information sent by a terminal, where the first indication information is configured to represent reported-information types supported by the terminal;
a configuring module 152 configured to configure specified reported-information types for the terminal according to the first indication information, where the specified reported-information types include one or more of the reported-information types supported by the terminal;
**[00131** ] an information sending module 153 configured to send second indication information to the terminal, where the second indication information is configured to represent the specified reported-information types, so that the terminal sends MDT measurement information corresponding to the second indication information to the base station.

As can be known from the above examples, first indication information sent by a terminal is received, where the first indication information is configured to represent reported-information types supported by the terminal. Specified reported-information types are configured for the terminal according to the first indication information, where the specified reported-information types include one or more of the reported-information types. Second indication information is sent to the terminal, where the second indication information is configured to represent the specified reported-information types configured by the base station for the terminal, so that the terminal sends MDT measurement information corresponding to the second indication information to the base station. In this way, the base station can receive only required MDT measurement information, improving information reporting efficiency and saving resource overhead.

In an example, based on the apparatus shown in FIG. 15, the first indication information includes one or more reported-information types corresponding to MDT measurement information that can be measured by the terminal.

In an example, based on the apparatus shown in FIG. 15, as shown in FIG. 16, the configuring module 152 may include:
a selecting submodule 161 configured to select one or more reported-information types from the reported-information types included in the first indication information;
a configuring submodule 162 configured to configure the selected reported-information types as specified reported-information types.

As can be known from the above examples, one or more reported-information types are selected from the reported-information types included in the first indication information, and the selected reported-information types are configured as specified reported-information types, so that the terminal may report only MDT measurement information of these specified reported-information types, meeting individual requirements of the base station and reducing wastes of resources and signaling.

In an example, based on the apparatus shown in FIG. 15, the second indication information includes one or more of the specified reported-information types configured by the base station for the terminal according to the first indication information. As shown in FIG. 17, the information sending module 153 may include:
an adding submodule 171 configured to add the second indication information to UEInformationRequest signaling;
a sending submodule 172 configured to send the UEInformationRequest signaling to the terminal, so that the terminal obtains the second indication information from the UEInformationRequest signaling.

**As** can be known from the above examples, the second indication information is sent to the terminal through the UEInformationRequest signaling, so that the terminal learns the specified reported-information types configured by the base station for the terminal in time, improving the reliability of transmission of the second indication information.

For the apparatus examples, since they basically correspond to the method examples, reference may be made to the partial description of the method examples. The apparatus examples described above are merely illustrative, where the units described as separate components may or may not be physically separated, and the components displayed as units may or may not be physical units, i.e., may be located in one place or may be distributed to multiple network units. Some or all of the modules may be selected according to actual needs to achieve the objectives of the present disclosure. Those of ordinary skill in the art can understand and implement the present disclosure without any creative effort.

The present disclosure further provides a non-transitory computer readable storage medium having a computer program stored thereon, where the computer program is configured to execute an information reporting method according to any of FIGS. 1-5.

The present disclosure further provides a non-transitory computer readable storage medium having a computer program stored thereon, wherein the computer program is configured to execute an information reporting method according to any of FIGS. 6-8.

The present disclosure further provides an information reporting apparatus. The apparatus is applicable to a terminal, and includes:
a processor; and
a memory for storing processor executable instructions,
**where** the processor is configured to:
send first indication information to a base station, where the first indication information is configured to represent reported-information types supported by the terminal;
receive second indication information sent by the base station, where the second indication information is configured to represent specified reported-information types configured by the base station for the terminal according to the first indication information, and the specified reported-information types include one or more of the reported-information types supported by the terminal;
send MDT measurement information corresponding to the second indication information to the base station.

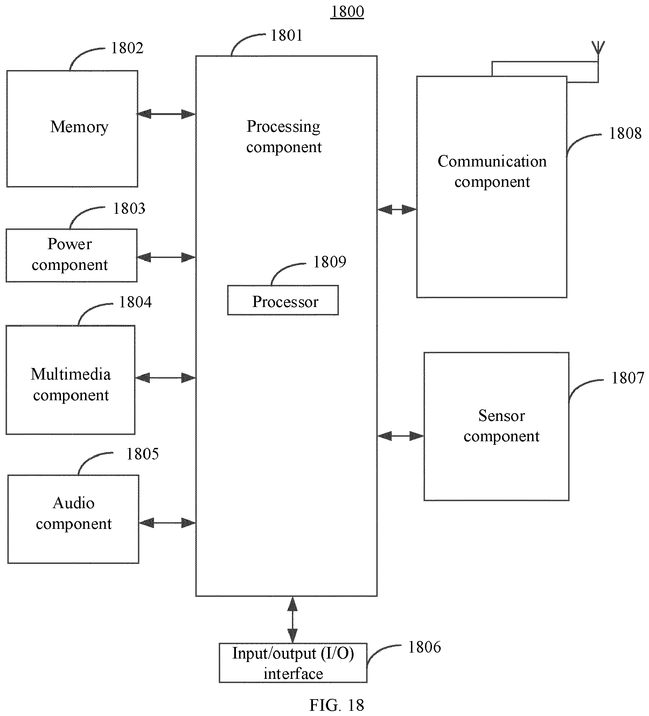

**FIG.** 18 is a schematic structural diagram illustrating an information reporting apparatus according to an example. As shown in FIG. 18, an information reporting apparatus 1800 is shown according to an example. The apparatus 1800 may be a computer, a mobile phone, a digital broadcast terminal, a messaging device, a game console, a tablet device, a medical equipment, a fitness equipment, a personal digital assistant, or other terminals.

Referring to FIG. 18, the apparatus 1800 may include one or more of the following components: a processing component 1801, a memory 1802, a power component 1803, a multimedia component 1804, an audio component 1805, an input/output (I/O) interface 1806, a sensor component 1807, and a communication component 1808.

The processing component 1801 usually controls the overall operation of the apparatus 1800, such as operations associated with display, telephone calls, data communications, camera operations, and recording operations. The processing component 1801 may include one or more processors 1809 to execute instructions to perform all or part of the blocks in the methods described above. Moreover, the processing component 1801 may include one or more modules to facilitate interaction between the processing component 1801 and other components. For example, the processing component 1801 may include a multimedia module to facilitate interaction between the multimedia component 1804 and the processing component 1801.

The memory 1802 is configured to store various types of data to support operation at the apparatus 1800. Examples of these data include instructions for any application or method operating at the apparatus 1800, contact data, phone book data, messages, pictures, videos, and the like. The memory 1802 may be implemented by any type of volatile or non-volatile storage device or a combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a disk or an optical disk.

The power component 1803 provides power to various components of the apparatus 1800. The power component 1803 may include a power management system, one or more power sources, and other components associated with power generated, managed, and distributed for the apparatus 1800.

The multimedia component 1804 includes a screen that provides an output interface between the apparatus 1800 and a user. In some examples, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensor may not only sense the boundary of touch or slide actions but also detect the duration and pressure associated with touch or slide operations. In some examples, the multimedia component 1804 includes a front camera and/or a rear camera. When the apparatus 1800 is in an operation mode, such as a shooting mode or a video mode, the front camera and/or the rear camera may receive external multimedia data. Each of the front and rear cameras may be a fixed optical lens system or have a focal length and an optical zoom capability.

The audio component 1805 is configured to output and/or input audio signals. For example, the audio component 1805 includes a microphone (MIC) configured to receive an external audio signal when the apparatus 1800 is in an operation mode, such as a call mode, a recording mode, and a voice recognition mode. The received audio signal may be further stored in the memory 1802 or transmitted via the communication component 1808. In some examples, the audio component 1805 also includes a loudspeaker for outputting an audio signal.

The I/O interface 1806 provides an interface between the processing component 1801 and a peripheral interface module which may be a keyboard, a click wheel, a button, or the like. These buttons may include, but are not limited to a home button, a volume button, a start button, and a lock button.

The sensor component 1807 includes one or more sensors for providing a status assessment in various aspects to the apparatus 1800. For example, the sensor component 1807 may detect an open/closed state of the apparatus 1800, and the relative positioning of components, for example, the component is a display and a keypad of the apparatus 1800. The sensor component 1807 may also detect a change in position of the apparatus 1800 or a component of the apparatus 1800, the presence or absence of a user in contact with the apparatus 1800, the orientation or acceleration/deceleration of the apparatus 1800 and a change in temperature of the apparatus 1800. The sensor component 1807 may include a proximity sensor configured to detect the presence of nearby objects without any physical contact. The sensor component 1807 may also include a light sensor, such as a CMOS or CCD image sensor, for use in imaging applications. In some examples, the sensor component 1807 may also include an acceleration sensor, a gyro sensor, a magnetic sensor, a pressure sensor, or a temperature sensor.

The communication component 1808 is configured to facilitate wired or wireless communication between the apparatus 1800 and other devices. The apparatus 1800 may access a wireless network based on a communication standard, such as WiFi, 2G or 3G, or a combination thereof. In an example, the communication component 1808 receives broadcast signals or broadcast associated information from an external broadcast management system via a broadcast channel. In an example, the communication component 1808 also includes a near field communication (NFC) module to facilitate short range communication. For example, the NFC module may be implemented based on a radio frequency identification (RFID) technology, an infrared data association (IrDA) technology, an ultra wide band (UWB) technology, a Bluetooth (BT) technology, and other technologies.

In an example, the apparatus 1800 may be implemented by one or more application specific integrated circuits (ASICs), digital signal processors (DSPs), digital signal processing devices (DSPDs), programmable logic devices (PLDs), a field programmable gate array (FPGA), a controller, a microcontroller, a microprocessor or other electronic elements for performing the above methods.

In an example, there is also provided a non-transitory computer readable storage medium including instructions, such as a memory 1802 including instructions, where the instructions are executable by the processor 1809 of the apparatus 1800 to perform the method as described above. For example, the non-transitory computer readable storage medium may be a ROM, a random access memory (RAM), a CD-ROM, a magnetic tape, a floppy disk, and an optical data storage device.

When the instructions in the storage medium are executed by the processor, the apparatus 1800 is caused to execute any of the above-described information reporting methods.

The present disclosure further provides an information reporting apparatus. The apparatus is applicable to a base station, and includes:
a processor; and
a memory for storing processor executable instructions,
where the processor is configured to:
receive first indication information sent by a terminal, where the first indication information is configured to represent reported-information types supported by the terminal;
configure specified reported-information types for the terminal according to the first indication information, where the specified reported-information types include one or more of the reported-information types supported by the terminal;
send second indication information to the terminal, where the second indication information is configured to represent the specified reported-information types, so that the terminal sends MDT measurement information corresponding to the second indication information to the base station.

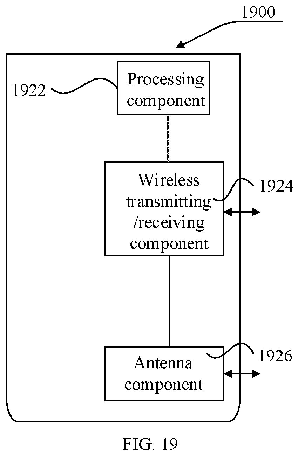

**FIG.** 19 is a schematic structural diagram illustrating an information reporting apparatus according to an example. The apparatus 1900 may be provided as a base station. Referring to FIG. 19, the apparatus 1900 includes a processing component 1922, a wireless transmitting/receiving component 1924, an antenna component 1926, and a signal processing portion specific to a wireless interface. The processing component 1922 may further include one or more processors.

One of the processors in the processing component 1922 may be configured to execute any of the above-described information reporting methods.

It is to be understood that the present disclosure is not limited to the precise structures that have described and shown in the drawings, and various modifications and changes can be made without departing from the scope thereof. The scope of the disclosure is to be limited only by the appended claims.

## Claims

1. An information reporting method, **characterized in that** the method is applied to a terminal, and comprises:
sending (110, 2-1) (110) first indication information to a base station, wherein the first indication information is configured to represent reported-information types that the terminal supports;
receiving (120, 2-6) second indication information sent by the base station, wherein the second indication information is configured to represent specified reported-information types configured by the base station for the terminal according to the first indication information, and the specified reported-information types include one or more of the reported-information types that the terminal supports;
sending (130, 2-9) Minimization of Drive Tests, MDT, measurement information corresponding to the second indication information to the base station;
wherein sending the first indication information to the base station comprises:
generating (310) Radio Resource Control, RRC, signaling, wherein the RRC signaling comprises the first indication information;
adding (320) the RRC signaling to specified signaling configured to represent the successful completion of an RRC connection establishment;
sending (330) the specified signaling to the base station, so that the base station obtains the first indication information from the specified signaling.

2. The method according to claim 1, wherein the first indication information comprises one or more reported-information types corresponding to MDT measurement information that is measurable by the terminal.

3. The method according to claim 1, wherein the second indication information comprises one or more of the specified reported-information types configured by the base station for the terminal according to the first indication information.

4. The method according to claim 1 or 3, wherein receiving the second indication information sent by the base station comprises:
receiving (410) UEInformationRequest signaling sent by the base station, wherein the UEInformationRequest signaling comprises the second indication information;
obtaining (420) the second indication information from the UEInformationRequest signaling.

5. The method according to claim 1 or 3, wherein sending the MDT measurement information corresponding to the second indication information to the base station comprises:
adding (510) the MDT measurement information corresponding to the second indication information to UEInformationResponse signaling;
sending (520) the UEInformationResponse signaling to the base station, so that the base station obtains the MDT measurement information corresponding to the second indication information from the UEInformationResponse signaling.

6. An information reporting method, **characterized in that** the method is applied to a base station, and comprises:
receiving (610) first indication information sent by a terminal, wherein the first indication information is configured to represent reported-information types that the terminal supports;
configuring (620) specified reported-information types for the terminal according to the first indication information, wherein the specified reported-information types include one or more of the reported-information types that the terminal supports;
sending (630) second indication information to the terminal, wherein the second indication information is configured to represent the specified reported-information types, so that the terminal sends Minimization of Drive Tests, MDT, measurement information corresponding to the second indication information to the base station;
wherein receiving the first indication information sent by the terminal, comprises:
receiving, from the terminal, a specified signaling configured to represent successful completion of an Radio Resource Control, RRC, connection establishment, wherein the specified signaling comprises a RRC signaling and the RRC signaling comprises the first indication information.

7. The method according to claim 6, wherein the first indication information comprises one or more reported-information types corresponding to MDT measurement information that is measurable by the terminal.

8. The method according to claim 7, wherein configuring the specified reported-information types for the terminal according to the first indication information comprises:
selecting (710) one or more reported-information types from the reported-information types comprised in the first indication information;
configuring (720) the selected reported-information types as specified reported-information types.

9. The method according to claim 6 or 8, wherein the second indication information comprises one or more of the specified reported-information types configured by the base station for the terminal according to the first indication information;
sending the second indication information to the terminal comprises:
adding (810) the second indication information to UEInformationRequest signaling;
sending (820) the UEInformationRequest signaling to the terminal, so that the terminal obtains the second indication information from the UEInformationRequest signaling.

10. An information reporting apparatus, **characterized in that** the apparatus is applied to a terminal, and comprises:
a processor; and
a memory for storing processor executable instructions,
wherein the processor is configured to:
send first indication information to a base station, wherein the first indication information is configured to represent reported-information types that the terminal supports;
receive second indication information sent by the base station, wherein the second indication information is configured to represent specified reported-information types configured by the base station for the terminal according to the first indication information, and the specified reported-information types include one or more of the reported-information types that the terminal supports;
send Minimization of Drive Tests, MDT, measurement information corresponding to the second indication information to the base station;
wherein when sending the first indication information to the base station, the processor is configured to:
generate Radio Resource Control, RRC, signaling, wherein the RRC signaling comprises the first indication information;
add the RRC signaling to specified signaling configured to represent the successful completion of an RRC connection establishment;
send the specified signaling to the base station, so that the base station obtains the first indication information from the specified signaling.

11. An information reporting apparatus, **characterized in that** the apparatus is applied to a base station, and comprises:
a processor; and
a memory for storing processor executable instructions,
wherein the processor is configured to:
receive first indication information sent by a terminal, wherein the first indication information is configured to represent reported-information types that the terminal supports;
configure specified reported-information types for the terminal according to the first indication information, wherein the specified reported-information types include one or more of the reported-information types that the terminal supports;
send second indication information to the terminal, wherein the second indication information is configured to represent the specified reported-information types, so that the terminal sends Minimization of Drive Tests, MDT, measurement information corresponding to the second indication information to the base station;
wherein when receiving the first indication information sent by the terminal, the processor is configured to:
receive, from the terminal, a specified signaling configured to represent successful completion of an Radio Resource Control, RRC, connection establishment, wherein the specified signaling comprises a RRC signaling and the RRC signaling comprises the first indication information.

## Patentansprüche

1. Verfahren zur Informationsberichterstattung, **dadurch gekennzeichnet, dass** das Verfahren bei einem Endgerät eingesetzt wird und umfasst:
Senden (110, 2-1) erster Angabeinformationen an eine Basisstation, wobei die ersten Angabeinformationen dazu ausgebildet sind, Arten von übermittelten Informationen darzustellen, die das Endgerät unterstützt;
Empfangen (120, 2-6) zweiter Angabeinformationen, die von der Basisstation gesendet wurden, wobei die zweiten Angabeinformationen dazu ausgebildet sind, bestimmte Arten von übermittelten Informationen darzustellen, die von der Basisstation für das Endgerät entsprechend den ersten Angabeinformationen konfiguriert wurden, und wobei die bestimmten Arten von übermittelten Informationen eine oder mehrere der Arten von übermittelten Informationen umfassen, die das Endgerät unterstützt;
Senden (130, 2-9) von Messinformationen eines Minimization of Drive Test, MDT, die den zweiten Angabeinformationen entsprechen, an die Basisstation; wobei das Senden der ersten Angabeinformationen an die Basisstation umfasst:
Erzeugen (310) einer Radio-Resource-Control-, RRC, -Signalisierung, wobei die RRC-Signalisierung die ersten Angabeinformationen umfasst;
Hinzufügen (320) der RRC-Signalisierung zu einer bestimmten Signalisierung, die dazu ausgebildet ist, den erfolgreichen Abschluss eines RRC-Verbindungsaufbaus darzustellen;
Senden (330) der bestimmten Signalisierung an die Basisstation, so dass die Basisstation die ersten Angabeinformationen von der bestimmten Signalisierung erhält.

2. Verfahren nach Anspruch 1, wobei die ersten Angabeinformationen eine oder mehreren Arten von übermittelten Informationen umfassen, die MDT-Messinformationen entsprechen, die von dem Endgerät messbar sind.

3. Verfahren nach Anspruch 1, wobei die zweiten Angabeinformationen eine oder mehrere der bestimmten Arten von übermittelten Informationen umfassen, die durch die Basisstation für das Endgerät entsprechen den ersten Angabeinformationen konfiguriert sind.

4. Verfahren nach Anspruch 1 oder 3, wobei das Empfangen der zweiten Angabeinformationen, die von der Basisstation gesendet wurden, umfasst:
Empfangen (410) einer von der Basisstation gesendeten UEInformationRequest-Signalisierung, wobei die UEInformationRequest-Signalisierung die zweiten Angabeinformationen umfasst;
Erhalten (420) der zweiten Angabeinformationen von der UEInformationRequest-Signalisierung.

5. Verfahren nach Anspruch 1 oder 3, wobei das Senden der MDT-Messinformationen, die den zweiten Angabeinformationen entsprechen, an die Basisstation umfasst:
Hinzufügen (510) der MDT-Messinformationen, die den zweiten Angabeinformationen entsprechen, zu der UEInformationResponse-Signalisierung;
Senden (520) der UEInformationResponse-Signalisierung an die Basisstation, so dass die Basisstation die MDT-Messinformationen, die den zweiten Angabeinformationen entsprechen, von der UEInformationResponse-Signalisierung erhält.

6. Verfahren zur Informationsberichterstattung, **dadurch gekennzeichnet, dass** das Verfahren bei einer Basisstation eingesetzt wird und umfasst:
Empfangen (610) erster Angabeinformationen, die von einem Endgerät gesendet wurden, wobei die ersten Angabeinformationen dazu ausgebildet sind, Arten von übermittelten Informationen darzustellen, die das Endgerät unterstützt;
Konfigurieren (620) bestimmter Arten von übermittelten Informationen für das Endgerät entsprechend den ersten Angabeinformationen, wobei die bestimmten Arten von übermittelten Angabeinformationen eine oder mehrere der Arten von übermittelten Informationen umfassen, die das Endgerät unterstützt;
Senden (630) zweiter Angabeinformationen an das Endgerät, wobei die zweiten Angabeinformationen dazu ausgebildet sind, die bestimmten Arten von übermittelten Informationen darzustellen, so dass das Endgerät Messinformationen eines Minimization of Drive Test, MDT, die den zweiten Angabeinformationen entsprechen, an die Basisstation sendet;
wobei das Empfangen der ersten Angabeinformationen, die von dem Endgerät gesendet wurden, umfasst:
Empfangen, von dem Endgerät, einer bestimmten Signalisierung, die dazu ausgebildet ist, den erfolgreichen Abschluss eines Radio-Resource-Control-, RRC, -Verbindungsaufbaus darzustellen, wobei die bestimmte Signalisierung eine RRC-Signalisierung umfasst und die RRC-Signalisierung die ersten Angabeinformationen umfasst.

7. Verfahren nach Anspruch 6, wobei die ersten Angabeinformationen eine oder mehrere Arten von übermittelten Informationen umfassen, die den MDT-Messinformationen entsprechen, die von dem Endgerät messbar sind.

8. Verfahren nach Anspruch 7, wobei das Konfigurieren der bestimmten Arten von übermittelten Informationen für das Endgerät entsprechend den ersten Angabeinformationen umfasst:
Auswählen (710) einer oder mehrerer Arten von übermittelten Informationen aus den Arten von übermittelten Informationen, die in den ersten Angabeinformationen enthalten sind;
Konfigurieren (720) der ausgewählten Arten von übermittelten Informationen als bestimmte Arten von übermittelten Informationen.

9. Verfahren nach Anspruch 6 oder 8, wobei die zweiten Angabeinformationen eine oder mehrere der bestimmten Arten von übermittelten Informationen umfassen, die von der Basisstation für das Endgerät entsprechend den ersten Angabeinformationen konfiguriert sind;
wobei das Senden der zweiten Angabeinformationen an das Endgerät umfasst:
Hinzufügen (810) der zweiten Angabeinformationen an die UEInformationRequest-Signalisierung;
Senden (820) der UEInformationRequest-Signalisierung an das Endgerät, so dass das Endgerät die zweiten Angabeinformationen von der UEInformationRequest-Signalisierung erhält.

10. Vorrichtung zur Informationsberichterstattung, **dadurch gekennzeichnet, dass** die Vorrichtung bei einem Endgerät eingesetzt wird und aufweist:
einen Prozessor; und
einen Speicher zum Speichern von Instruktionen, die von dem Prozessor ausführbar sind,
wobei der Prozessor für Folgendes ausgebildet ist:
Senden erster Angabeinformationen an eine Basisstation, wobei die ersten Angabeinformationen dazu ausgebildet sind, Arten von übermittelten Informationen darzustellen, die das Endgerät unterstützt;
Empfangen zweiter Angabeinformationen, die von der Basisstation gesendet wurden, wobei die zweiten Angabeinformationen dazu ausgebildet sind, bestimmte Arten von übermittelten Informationen darzustellen, die von der Basisstation für das Endgerät entsprechend den ersten Angabeinformationen konfiguriert wurden, und wobei die bestimmten Arten von übermittelten Informationen eine oder mehrere der Arten von übermittelten Informationen umfassen, die das Endgerät unterstützt;
Senden von Messinformationen eines Minimization of Drive Test, MDT, die den zweiten Angabeinformationen entsprechen, an die Basisstation;
wobei der Prozessor beim Senden der ersten Angabeinformationen an die Basisstation für Folgendes ausgebildet ist:
Erzeugen einer Radio-Resource-Control-, RRC, -Signalisierung, wobei die RRC-Signalisierung die ersten Angabeinformationen umfasst;
Hinzufügen der RRC-Signalisierung zu einer bestimmten Signalisierung, die dazu ausgebildet ist, den erfolgreichen Abschluss eines RRC-Verbindungsaufbaus darzustellen;
Senden der bestimmten Signalisierung an die Basisstation, so dass die Basisstation die ersten Angabeinformationen von der bestimmten Signalisierung erhält.

11. Vorrichtung zur Informationsberichterstattung, **dadurch gekennzeichnet, dass** die Vorrichtung bei einem Endgerät eingesetzt wird und aufweist:
einen Prozessor; und
einen Speicher zum Speichern von Instruktionen, die von dem Prozessor ausführbar sind,
wobei der Prozessor für Folgendes ausgebildet ist:
Empfangen erster Angabeinformationen, die von einem Endgerät gesendet wurden, wobei die ersten Angabeinformationen dazu ausgebildet sind, Arten von übermittelten Informationen darzustellen, die das Endgerät unterstützt;
Konfigurieren bestimmter Arten von übermittelten Informationen für das Endgerät entsprechend den ersten Angabeinformationen, wobei die bestimmten Arten von übermittelten Informationen eine oder mehrere der Arten von übermittelten Informationen umfassen, die das Endgerät unterstützt;
Senden zweiter Angabeinformationen an das Endgerät, wobei die zweiten Angabeinformationen dazu ausgebildet sind, die bestimmten Arten von übermittelten Informationen darzustellen, so dass das Endgerät Messinformationen eines Minimization of Drive Test, MDT, die den zweiten Angabeinformationen entsprechen, an die Basisstation sendet;
wobei der Prozessor beim Empfangen der von dem Endgerät gesendeten ersten Angabeinformationen für Folgendes ausgebildet ist:
Empfangen, von dem Endgerät, einer bestimmten Signalisierung, die dazu ausgebildet ist, den erfolgreichen Abschluss eines Radio-Resource-Control-, RRC, -Verbindungsaufbaus darzustellen, wobei die bestimmte Signalisierung eine RRC-Signalisierung umfasst und die RRC-Signalisierung die ersten Angabeinformationen umfasst.

## Revendications

1. Procédé de rapport d'informations, **caractérisé en ce que** le procédé est appliqué à un terminal, et comprend :
l'envoi (110, 2-1) des premières informations d'indication à une station de base, dans lequel les premières informations d'indication sont configurées pour représenter des types d'informations rapportées pris en charge par le terminal ;
la réception (120, 2-6) des secondes informations d'indication envoyées par la station de base, dans lequel les secondes informations d'indication sont configurées pour représenter des types d'informations rapportées spécifiés configurés par la station de base pour le terminal selon les premières informations d'indication, et les types d'informations rapportées spécifiés comportent un ou plusieurs des types d'informations rapportées pris en charge par le terminal ;
l'envoi (130, 2-9) d'informations de mesure de minimisation des tests de conduite, MDT, correspondant aux secondes informations d'indication à la station de base ;
dans lequel l'envoi des premières informations d'indication à la station de base comprend :
la génération (310) d'une signalisation de commande de ressource radio, RRC, dans lequel la signalisation RRC comprend les premières informations d'indication ;
l'ajout (320) de la signalisation RRC à une signalisation spécifiée configurée pour représenter l'achèvement réussi d'un établissement de connexion RRC ;
l'envoi (330) de la signalisation spécifiée à la station de base, de sorte que la station de base obtienne les premières informations d'indication à partir de la signalisation spécifiée.

2. Procédé selon la revendication 1, dans lequel les premières informations d'indication comprennent un ou plusieurs types d'informations rapportées correspondant à des informations de mesure MDT qui sont mesurables par le terminal.

3. Procédé selon la revendication 1, dans lequel les secondes informations d'indication comprennent un ou plusieurs des types d'informations rapportées spécifiés configurés par la station de base pour le terminal selon les premières informations d'indication.

4. Procédé selon la revendication 1 ou 3, dans lequel la réception des secondes informations d'indication envoyées par la station de base comprend :
la réception (410) de la signalisation UEInformationRequest envoyée par la station de base, dans lequel la signalisation UEInformationRequest comprend les secondes informations d'indication ;
l'obtention (420) des secondes informations d'indication à partir de la signalisation UEInformationRequest.

5. Procédé selon la revendication 1 ou 3, dans lequel l'envoi des informations de mesure MDT correspondant aux secondes informations d'indication à la station de base comprend :
l'ajout (510) des informations de mesure MDT correspondant aux secondes informations d'indication à la signalisation UEInformationResponse ;
l'envoi (520) de la signalisation UEInformationResponse à la station de base, de sorte que la station de base obtienne les informations de mesure MDT correspondant aux secondes informations d'indication à partir de la signalisation UEInformationResponse.

6. Procédé de rapport d'informations, **caractérisé en ce que** le procédé est appliqué à une station de base, et comprend :
la réception (610) des premières informations d'indication envoyées par un terminal, dans lequel les premières informations d'indication sont configurées pour représenter des types d'informations rapportées pris en charge par le terminal ;
la configuration (620) des types d'informations rapportées spécifiés pour le terminal selon les premières informations d'indication, dans lequel les types d'informations rapportées spécifiés comportent un ou plusieurs des types d'informations rapportées pris en charge par le terminal ;
l'envoi (630) des secondes informations d'indication au terminal, dans lequel les secondes informations d'indication sont configurées pour représenter les types d'informations rapportées spécifiés, de sorte que le terminal envoie des informations de mesure de minimisation des tests de conduite, MDT, correspondant aux secondes informations d'indication à la station de base ;
dans lequel la réception des premières informations d'indication envoyées par le terminal comprend :
la réception, à partir du terminal, d'une signalisation spécifiée configurée pour représenter l'achèvement réussi d'un établissement de connexion de commande de ressource radio, RRC, dans lequel la signalisation spécifiée comprend une signalisation RRC et la signalisation RRC comprend les premières informations d'indication.

7. Procédé selon la revendication 6, dans lequel les premières informations d'indication comprennent un ou plusieurs types d'informations rapportées correspondant à des informations de mesure MDT qui sont mesurables par le terminal.

8. Procédé selon la revendication 7, dans lequel la configuration des types d'informations rapportées spécifiés pour le terminal selon les premières informations d'indication comprend :
la sélection (710) d'un ou plusieurs types d'informations rapportées parmi les types d'informations rapportées compris dans les premières informations d'indication ;
la configuration (720) des types d'informations rapportées sélectionnés en tant que types d'informations rapportées spécifiés.

9. Procédé selon la revendication 6 ou 8, dans lequel les secondes informations d'indication comprennent un ou plusieurs des types d'informations rapportées spécifiés configurés par la station de base pour le terminal selon les premières informations d'indication ;
l'envoi des secondes informations d'indication au terminal comprend :
l'ajout (810) des secondes informations d'indication à la signalisation UEInformationRequest ;
l'envoi (820) de la signalisation UEInformationRequest au terminal, de sorte que le terminal obtienne les secondes informations d'indication à partir de la signalisation UEInformationRequest.

10. Appareil de rapport d'informations, **caractérisé en ce que** l'appareil est appliqué à un terminal, et comprend :
un processeur ; et
une mémoire destinée au stockage des instructions exécutables par le processeur ;
dans lequel le processeur est configuré pour :
envoyer des premières informations d'indication à une station de base, dans lequel les premières informations d'indication sont configurées pour représenter des types d'informations rapportées pris en charge par le terminal ;
recevoir des secondes informations d'indication envoyées par la station de base, dans lequel les secondes informations d'indication sont configurées pour représenter des types d'informations rapportées spécifiés configurés par la station de base pour le terminal selon les premières informations d'indication, et les types d'informations rapportées spécifiés comportent un ou plusieurs des types d'informations rapportées pris en charge par le terminal ;
envoyer des informations de mesure de minimisation des tests de conduite, MDT, correspondant aux secondes informations d'indication à la station de base ;
dans lequel lors de l'envoi des premières informations d'indication à la station de base, le processeur est configuré pour :
générer une signalisation de commande de ressource radio, RRC, dans lequel la signalisation RRC comprend les premières informations d'indication ;
ajouter la signalisation RRC à la signalisation spécifiée configurée pour représenter l'achèvement réussi d'un établissement d'une connexion RRC ;
envoyer la signalisation spécifiée à la station de base, de sorte que la station de base obtienne les premières informations d'indication à partir de la signalisation spécifiée.

11. Appareil de rapport d'informations, **caractérisé en ce que** l'appareil est appliqué à une station de base, et comprend :
un processeur ; et
une mémoire destinée au stockage des instructions exécutables par le processeur ;
dans lequel le processeur est configuré pour :
recevoir des premières informations d'indication envoyées par un terminal, dans lequel les premières informations d'indication sont configurées pour représenter des types d'informations rapportées pris en charge par le terminal ;
configurer des types d'informations rapportées spécifiés pour le terminal selon les premières informations d'indication, dans lequel les types d'informations rapportées spécifiés comportent un ou plusieurs des types d'informations rapportées que le terminal prend en charge ;
envoyer des secondes informations d'indication au terminal, dans lequel les secondes informations d'indication sont configurées pour représenter les types d'informations signalées spécifiés, de sorte que le terminal envoie des informations de mesure de minimisation des tests de conduite, MDT, correspondant aux secondes informations d'indication à la station de base ;
dans lequel lors de la réception des premières informations d'indication envoyées par le terminal, le processeur est configuré pour :
recevoir, à partir du terminal, une signalisation spécifiée configurée pour représenter l'achèvement réussi d'un établissement de connexion de commande de ressource radio, RRC, dans lequel la signalisation spécifiée comprend une signalisation RRC et la signalisation RRC comprend les premières informations d'indication.
